Europäisches Patentamt

European Patent Office

Office européen des brevets

(19)

(11) **EP 0 720 350 B1**

(12) **EUROPEAN PATENT SPECIFICATION**

(45) Date of publication and mention
of the grant of the patent:
**25.06.2003 Bulletin 2003/26**

(51) Int Cl.⁷: **H04N 1/52**

(21) Application number: **95120610.1**

(22) Date of filing: **27.12.1995**

(54) **Method of recording an image**

Bildaufzeichnnungsverfahren

Procédé d'enregistrement d'images

(84) Designated Contracting States:
**DE FR GB**

(30) Priority: **28.12.1994 JP 32811794**

(43) Date of publication of application:
**03.07.1996 Bulletin 1996/27**

(60) Divisional application:
**02024955.3 / 1 292 116**

(73) Proprietor: **FUJI PHOTO FILM CO., LTD.
Kanagawa-ken (JP)**

(72) Inventor: **Sawano, Mitsuru
Fujinomiya-shi, Sizuoka-ken (JP)**

(74) Representative: **Grünecker, Kinkeldey,
Stockmair & Schwanhäusser Anwaltssozietät
Maximilianstrasse 58
80538 München (DE)**

(56) References cited:
**EP-A- 0 438 271        EP-A- 0 593 304
US-A- 5 297 878**

- **PATENT ABSTRACTS OF JAPAN vol. 17, no. 483
  (M-1472), 2 September 1993 & JP 05 116356 A
  (FUJI PHOTO FILM CO LTD), 14 May 1993,**
- **PATENT ABSTRACTS OF JAPAN vol. 17, no. 552
  (M-1491), 5 October 1993 & JP 05 155051 A (FUJI
  PHOTO FILM CO LTD), 22 June 1993,**

EP 0 720 350 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

BACKGROUND OF THE INVENTION

Field of the Invention:

The present invention relates to a method of recording an image which makes it possible to display a multiplicity of colors with a multiplicity of gradations by making dot pitches with respect to the separation of each, color relatively variable among various colors.

Description of the Related Art:

As a means for obtaining a recording of a multiplicity of colors with a multiplicity of gradations, it is possible to cite, for example, the halftone dot gradation representation for representing a desired gradation by making each halftone-dot area variable in correspondence with the gradation. In this case, a recording is effected by superimposing dots of respective colors having identical shapes one on top of another so as to cope with a multicolor recording. However, in the event that a misregistration should occur for each recording, color moire would result.

To avoid the aforementioned color moire, it is possible to cope with the problem by improving the mechanical accuracy. However, since a technical difficulty is involved, the color moire is avoided in fields such as offset printing by varying the angle of arrangement of dots for each color. That is, instead of arranging the dots regularly in grid form, the angle of arrangement of the dots with respect to the main scanning direction is changed by 15, 30, 45, or 75 degrees.

Also, a means is known for suppressing the color moire by means of random dots, which are free of directionality for each color, by adopting the so-called FM screening in which dots of a predetermined size are arranged at random in correspondence with a gradation.

The above-described means is capable of effectively suppressing the occurrence of color moire in a case where dot pitches in the main scanning direction and subscanning direction can be set to be smaller than a minimum unit area in image processing which is dependent on an image processor of an image recording apparatus. However, in the case of line heads, such as a thermal head, a liquid-crystal head, a light-emitting diode (LED) head, and an electroluminescence (EL) head, in which the dot pitch in the main scanning direction is restricted by the size of a recording element and is substantially set to the aforementioned minimum unit area, the degree of freedom in the change of the dot pitch is limited to the subscanning direction. Accordingly, it is not possible to suppress moire fringes effectively.

To overcome the above-described situation, a method of recording a color image disclosed in Japanese Patent Application Laid-Open No. 155057/1993 has been proposed. According to this method, respective pixels of the three primary colors are alternately offset by about 1/2 pitches in the subscanning direction so that the pixels of the three primaries are not arranged linearly in the main scanning direction, and the pixel length of one of the three primaries in the subscanning direction is set to be 1/2 of the pixel length of the other colors. As a result, even if a misregistration occurs, color patterns in two adjacent rows are maintained in a relationship of complementary color. Hence, the entire tone of color does not change, and it is possible to make the irregularity in color less conspicuous.

As described above, various means have been proposed to obviate the color moire at the time when a multiplicity of colors are recorded with a multiplicity of gradations. However, even in the case where the multiplicity of colors are represented with the multiplicity of gradations by changing the angle of arrangement of halftone dots, it is difficult to obviate the occurrence of color moire which is called a rosette pattern which constitutes a factor for harsh texture.

In addition, according to the method of recording a color image disclosed in Japanese Patent Application Laid-Open No. 155057/1993. even in the case where the dot pitch in the main scanning direction is limited, the color moire can be suppressed effectively in the case of three colors. This being the case, however, it is difficult to obviate the color moire which occurs in a case where a multiplicity of colors are recorded with a multiplicity of gradations through the four-color separation which is widely adopted in printing or graphic arts.

JP 05 116 356 discloses a melting - type color thermal transfer recording process.

SUMMARY OF THE INVENTION

Accordingly, the present invention has been devised in view of the above-described circumstances, and it is an object of the present invention to provide a method of recording an image which makes it possible to effectively suppress color moire even in a case where the dot pitch in the main scanning direction is structurally fixed.

To this end, in accordance with a first aspect of the invention, there is provided a method of recording a multicolor image according to claim 1. Preferred embodiments are disclosed in the dependent claims.

In the present specification, the term "dot" is defined as a continuous tone dot (i.e., a dot having a substantially fixed shape and a variable density) and/or a halftone dot (i.e., a dot having substantially fixed density and a variable shape). In addition, the term "pixel" is defined as a unit of image recording which consists of the dot and/or a blank. Accordingly, the "dot pitch" referred to herein represents the sum of a dot length and a blank length in a designated direction in a relevant pixel (i.e., the dot pitch represents the pixel length in a designated direction).

According to the above-described means in accordance with the present invention, when an image is recorded by a head having a plurality of recording elements arranged in a predetermined pitch, color moire can be suppressed by varying the dot pitch in the subscanning direction by a desired magnification with respect to each color separation.

The magnification which is set for the dot pitch of each color separation in the subscanning direction is set to a fractional multiple of the dot pitch of one color which is recorded with a normally arranged pattern (i.e., by setting the magnification with respect to the normal pattern as 1).

That is, when a four-color-separated image is formed, for example, Y is recorded with the normally arranged pattern, and M, C, and K are recorded with patterns which are set to mutually different fractional multiples of the dot pitch of Y. That is, the dot pitch ratio is set to Y : M : C : K = 1 : s : t : u (s, t, u: fractional numbers).

In addition, the color moire can also be suppressed by recording at least one color with a pattern in which the dots are arranged randomly in the subscanning direction.

Further, the color moire can also be suppressed by recording one color with a normally arranged pattern and by recording the other color(s) with a respective random pattern.

In particular, the color moire can also be suppressed favorably if yellow is recorded with a randomly arranged pattern, and magenta, cyan, and black are recorded with respective patterns in which the dot pitches are set to mutually different fractional multiples.

An optimum ratio in the subscanning direction of the dot pitches of the colors which makes it possible to suppress the color moire is Y : M : C : K = 1 : 0.75 : 0.60 : 0.50.

In the case where the dot pitches in the subscanning direction are set to the optimum ratio, if horizontal-line moire appears in the recording of a particular image, the dot pitches in the main scanning direction of the respective colors are varied. As a result, the occurrence of moire is dispersed without synchronization, so that the occurrence of the horizontal-line moire can be avoided.

More preferably, the ratio in the main scanning direction of the dot pitches for the respective colors is set to Y : M : C : K = 2 : 1 : 2 : 1, and the ratio in the subscanning direction is set to 1 : 0.75 : 0.60 : 0.50.

This combination is obtained by a resolution conversion operation and a mask operation. Further, pattern processing which is executed after the resolution conversion operation and cancellation processing which is executed before or after the mask operation are executed.

The pattern processing and the cancellation processing are for reducing the amount of information in the gradation data of the image, and are used to alleviate the burden imposed on a recording apparatus. In pattern processing, the number of offset factors of a submatrix to which the gradations of the pixels are allotted can be determined in accordance with the value of the gradation data. In addition, in a case where the value of the gradation data is a maximum value, i.e., represents a maximum density, the gradation data can be extracted. This operation is performed for faithfully representing a contour of a character or the like.

The above and other objects, features and advantages of the present invention will become more apparent from the following detailed description of the invention when read in conjunction with the accompanying drawings.

BRIEF DESCRIPTION OF THE DRAWINGS

Fig. 1A through 1D are diagrams illustrating patterns in accordance with an embodiment of the present invention and with an example provided for a better understanding of the invention.

Fig. 2 is a diagram illustrating horizontal-line moire;

Fig. 3 is a diagram illustrating patterns for avoiding horizontal-line moire shown in Fig. 2;

Fig. 4 is a diagram illustrating processing for obtaining arrangement patterns in accordance with the present invention;

Fig. 5 is a diagram illustrating processing for obtaining arrangement patterns in accordance with the present invention;

Fig. 6 is a diagram illustrating processing for obtaining arrangement patterns in accordance with the present invention;

Fig. 7 is a diagram illustrating processing for obtaining arrangement patterns in accordance with the present invention;

Fig. 8 is a diagram illustrating processing for obtaining arrangement patterns in accordance with the present invention; and

Fig. 9 is a diagram of a pattern in which the various color patterns shown in Fig. 3 are superimposed one on top of another.

Fig. 10 is a schematic block diagram of the recording apparatus.

Fig. 11 is a schematic flow diagram of 4 color image recording in accordance with the present invention.

## DESCRIPTION OF THE PREFERRED EMBODIMENT

Referring now to the accompanying drawings, a description will be given of an embodiment of the present invention.

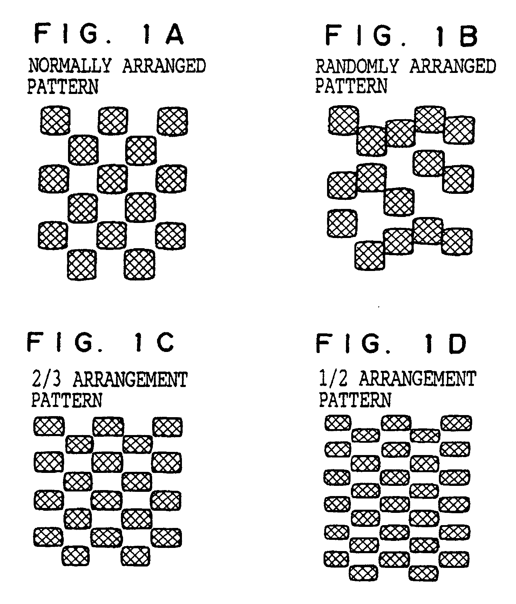

Fig. 1A, 1C and 1D show an embodiment of the present invention, and illustrate recording patterns which are adopted for each color in a case where a multiplicity of colors are recorded with a multiplicity of gradations through the four-color separation of yellow (Y), magenta (M), cyan (C), and black (K).

That is, Fig. 1A shows a specific normally arranged pattern in which the dots are arranged regularly. Fig. 1B shows in an example provided for a better understanding of the invention a randomly arranged pattern in which the dots are arranged randomly in the subscanning direction. Fig. 1C shows a 2/3 arrangement pattern in which the dots with their dot pitches in the subscanning direction reduced to 2/3 of those of a normal pattern are arranged regularly. Fig. 1D shows a 1/2 arrangement pattern in which the dots with their dot pitches in the subscanning direction reduced to 1/2 of those of the normal pattern are arranged regularly.

Further, an arrangement pattern can also be formed in which the dot pitch in the subscanning direction is varied by a predetermined magnification, in the same way as in Fig. 1C and 1D.

The following shows a visual evaluation of color moire and harsh texture obtained when monotone images are recorded with respective area ratios set to 50% in the respective color separation by using a recording apparatus having a main-scanning-direction resolution of 300 dpi and a sub-scanning-direction resolution of 600 dpi and provided with a line thermal head having a main-scanning-direction length of 70 5m and a sub-scanning-direction length of 55 5m in terms of the heater size, by fixing the dot pitch in the main scanning direction to 300 dpi, and by varying the dot pitch in the subscanning direction (with the normal dot pitch set to 300 dpi) in various ways.

Incidentally, a recording was effected such that color moire was made easily observable by causing a misregistration of the colors at the time of evaluation. Recording materials used were colorants (Y, M, C, and K) used in a thermosensitive transfer recording material disclosed in Japanese Patent Application Laid-Open No. 117359/1995.

That is, the thermosensitive transfer material is prepared by a process in which 0.24 g of a stearic acid amide and 60 g of n-PrOH are added to 10 g of four kinds of dispersions including the following colorants A to D so as to obtain a coating solution, and a polyester film (manufactured by TEIJIN LTD.) provided with release treatment on its reverse surface and having a thickness of 5 5m is coated such that dried film thicknesses A to D become 0.36 5m, 0.38 5m, 0.42 5m, and 0.40 5m, respectively.

| | | | |
|---|---|---|---|
| A: cyan pigment: (CI, P. B. 15:4) | 12 g | - | - |
| B: magenta pigment: ( CI, P. R. 57:1) | - | 12 g | - |
| C: yellow pigment: (CI, P. Y. 14) | - | - | 12 g |
| D: carbon: (MA-100 manufactured by Mitsubishi Chemical Corp.) | | | 12 g |
| Butyral resin: (S-LEC FPD-1 manufactured by Sekisui Chemical Co., Ltd., with a softening point of 70oC and an average polymerization degree of 300 or less) | | | 12.0 g |
| Solvent: n-propyl alcohol (n-PrOH) | | | 110.4 g |
| Dispersion assistant: Solsperse S-20000 (manufactured by ICI Japan Ltd.) | | | 0.8 g |

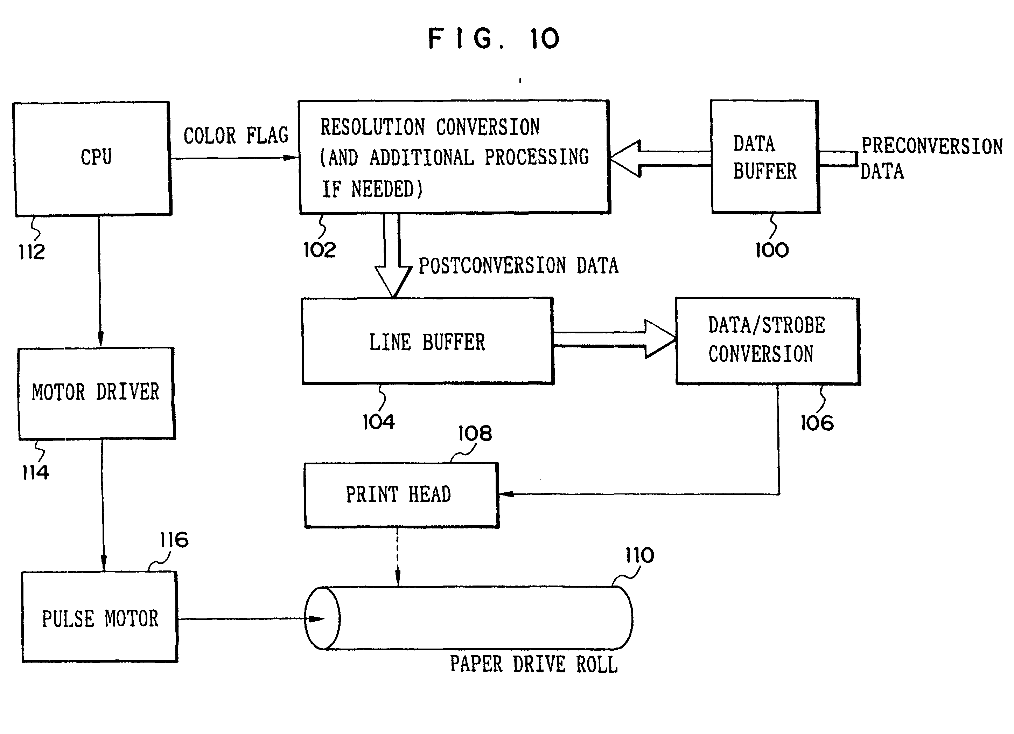

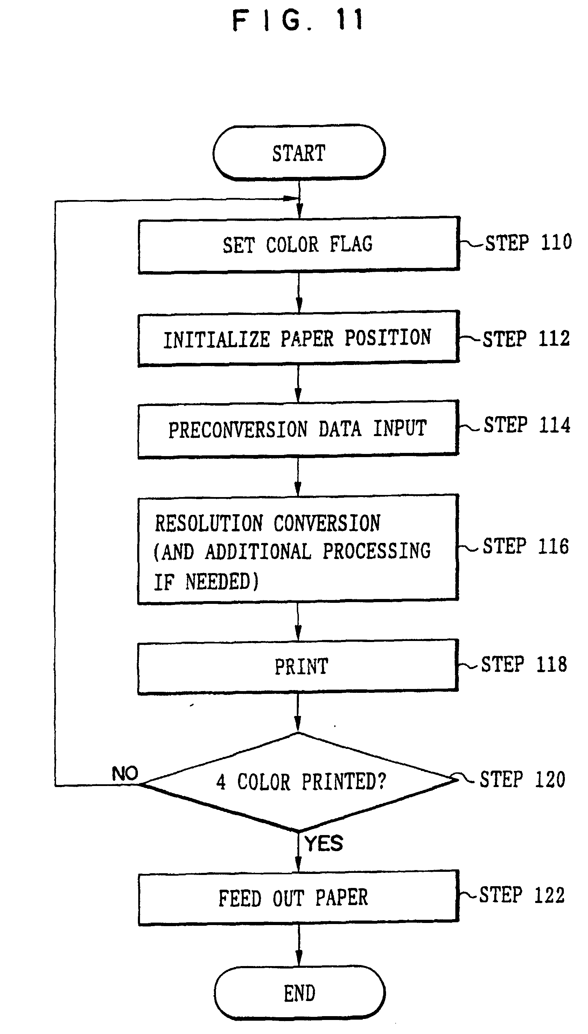

A schematic block diagram of the recording apparatus is shown in Fig. 10, and a flow diagram of 4 color image recording operation is summarized in Fig.11.

In step 110, the color flag is set to resolution conversion block 102 by the CPU 112 to indicate the one specific color separation image data to be processed. Next, in step 112, the paper position is initialized (reset) to start recording of the indicated color separation, and then, in step 114, the indicated color image data is loaded to resolution conversion block through data buffer 100. The resolution conversion and additional processing (if needed) are performed for loaded data, and the converted data is loaded to line buffer 104 for printing. In step 118, the line data is printed by print head 108 through data/strobe conversion 106. thus the indicated color image is printed through line by line base operation. During the printing, the rotation speed of the paper dive roll 110 is maintained to be constant by CPU 112 through motor drive 114 and pulse motor 116. If it is determined, in step 120, that there remains other color separation to be printed, the same process is repeated from step 110 for remaining color. If all color separations are printed out, the apparatus feed out the printed paper, and the operation ends.

Table 1

| | Y | M | C | K | Color Moiré | Harshness | Remarks |
|---|---|---|---|---|---|---|---|
| Example 1 | normal | 1/2 | normal | 2/3 | Δ | O | |
| Example 2 | 3/4 | 1/2 | normal | 2/3 | O | O | sin30° : sin60° : |
| Example 3 | 1/2 | 0.866 | normal | 0.259 | O | O | sin90° : sin15° |
| Example 4 | random | random | random | random | O | × | |
| Example 5 | random | random | random | normal | O | Δ | |
| Example 6 | random | 1/2 | normal | 2/3 | O | O | |
| Example 7 | 1/2 | random | normal | 2/3 | O | Δ | |
| Example 8 | normal | 3/4 | 3/5 | 1/2 | O | O | |
| Example 9 | density | density | density | 1/2 | O | O | sharp black contour |
| Comparative Example 1 | normal | normal | normal | normal | × | O | |
| Comparative Example 2 | normal | normal | normal | none | Δ | O | 3 colors |
| Comparative Example 3 | normal | 1/2 | normal | none | O | O | 3 colors |
| Comparative Example 4 | normal | 1/2 | normal | 1/2 | × | O | |
| Comparative Example 5 | normal | normal | normal | 1/2 | × | O | |
| Comparative Example 6 | density | density | density | density | O | O | black blurs |

Legends: O: practically usable; Δ: practically usable depending on applications;

× : outside an allowable range

density: 100% area ratio continuous tone pixel

EP 0 720 350 B1

As shown in Table 1, if the dot pitch ratio for the subscanning direction was set to one consisting of fractional numbers relatively among the respective colors, the color moire was alleviated. In particular, if K was set to a fractional number, the color moire was further alleviated. (See Examples 1 to 3, 8 and 9.)

In addition, if the random arrangement pattern according to the example provided for a better understanding of the invention was adopted, the color moire was alleviated, but harsh texture intensified (see Example 4). Here, if the random arrangement was adopted for Y in which the harsh texture was less noticeable, the color moire and the harsh texture were alleviated (see Example 6).

Incidentally, Example 3 shows a case in which, in the conventional example in which the angles of arrangement of color-separated dots are changed with respect to the main scanning direction, the dot pitch ratio (i.e., sin30o : sin60o : sin90o : sin15o) for the subscanning direction in a case where the angles of arrangement of Y, M, C, and K are respectively set to 30, 60, 90, and 15 degrees is adopted only for the subscanning direction.

From the above evaluation, it was possible to obtain substantially satisfactory results in the respective examples in the three-color-separated recording. With the four-color-separated recording, however, satisfactory results were obtained in Example 6 which is another example provided for a better understanding of the invention in which the random arrangement was adopted, as well as in Example 8 in which arrangement patterns for Y, M, C, and K were set to the normally arranged pattern, a 3/4 arrangement pattern, a 3/5 arrangement pattern, and a 1/2 arrangement pattern, respectively.

That is, the preferable pattern which gives a satisfactory result without adopting the random arrangement is the pattern in which the dot pitch ratio for the subscanning direction among Y, M, C, and K is set to 1 : 0.75 : 0.60 : 0.50.

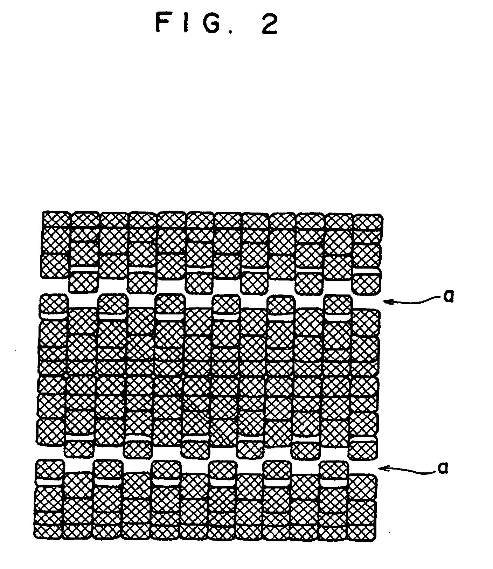

Incidentally, Example 8 shows a ratio which is capable of suppressing the color moire to a minimum; however, there are cases where horizontal-line moire a is generated due to the coincidence of a moire cycle depending on an image, as shown in Fig. 2.

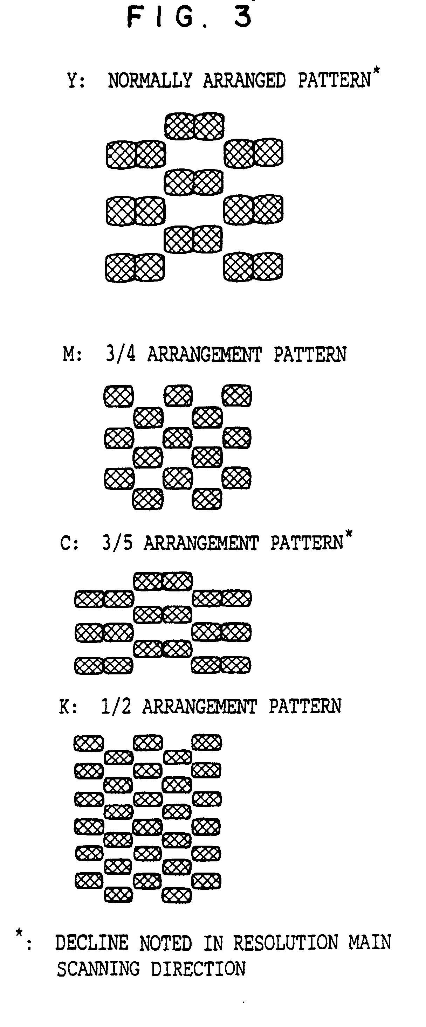

Accordingly, arrangement patterns are adopted in which, as shown in Fig. 3, the pitches of dots in the main scanning direction for Y and C, which have sub-scanning-direction dot pitches set as in Example 8, are set to 2-fold pitches, so as to reduce the resolution by one half.

Namely, arrangement patterns are adopted in which the dot pitch ratio for the subscanning direction among Y, M, C, and K is set to 1 : 0.75 : 0.60 : 0.50, and the dot pitch ratio for the main scanning direction is set to 2 : 1 : 2 : 1. In the dot pitch ratios for the respective scanning directions are taken into consideration, one preferable example of combinations for Y, M, C, and K (the main-scanning-direction dot pitch and the sub-scanning direction dot pitch) are (150 dpi, 300 dpi), (300 dip, 400 dpi), (150 dpi, 500 dpi), and (300 dpi, 600 dpi).

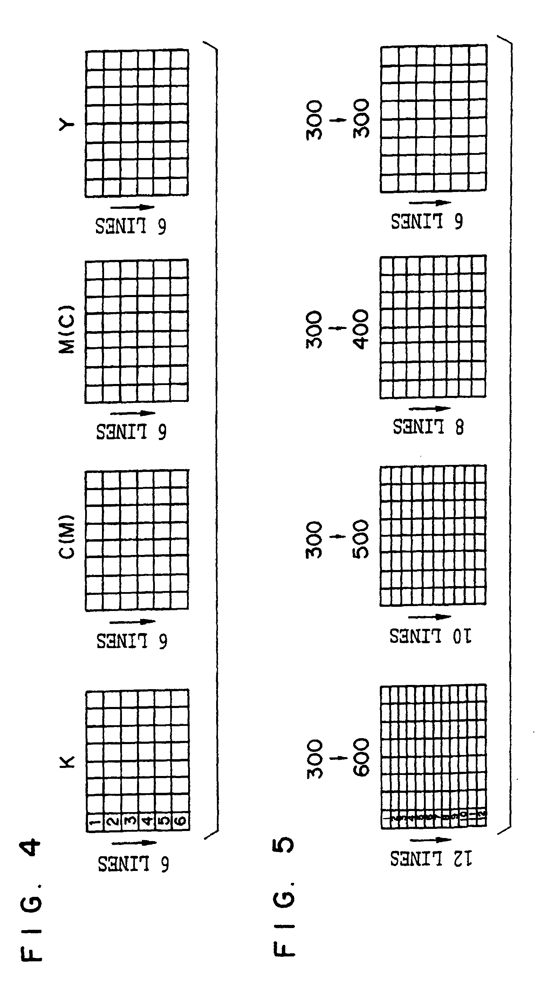

Referring now to Figs. 4 to 8, a description will be given of the sequence of execution in the case where the dot pitch ratios for the main scanning direction and the subscanning direction among Y, M, C, and K are respectively set to 2 : 1 : 2 : 1 and 1 : 0.75 : 0.60 : 0.50. Incidentally, a description will be given here of the conversion of resolution in the subscanning direction.

First, as shown in Fig. 4, gradation images of the respective colors represented by predetermined normally arranged patterns (e.g., 300 dpi) by means of 8-bit (i.e., 256-gradation) data trains are processed for the subscanning direction by a 6-line cycle for each color. Incidentally, if the total number of lines in the subscanning direction of the gradation image is not a multiple of 6, a blank line is added to a final line, so as to set the total number of lines in the subscanning direction of the gradation image to a multiple of 6.

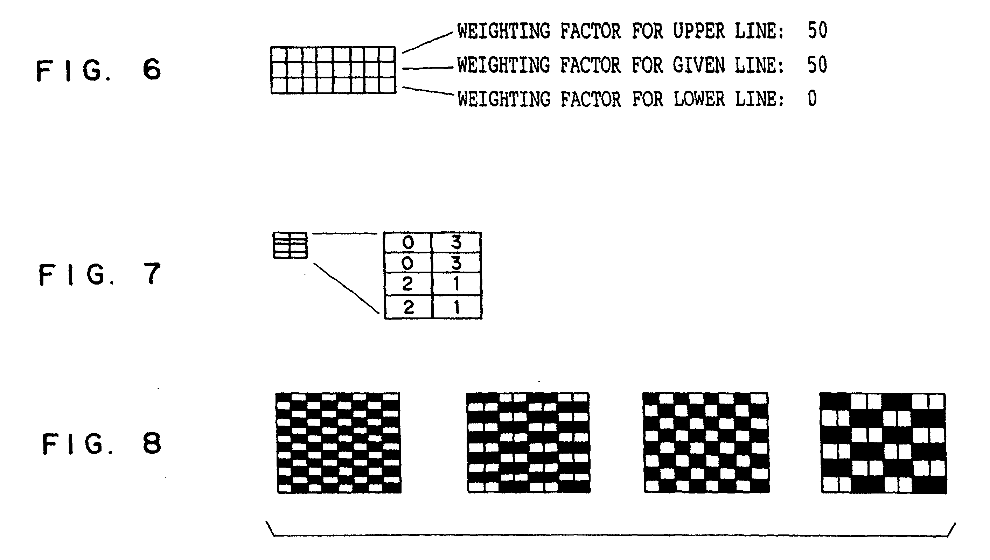

Next, as shown in Fig. 5, the gradation image data for the subscanning direction is subjected to interpolation processing depending on the position of the gradation image, thereby converting the resolution. In the illustrated example, the resolutions in the subscanning direction of the respective gradation images of Y, M, C, and K represented by 300 dpi are respectively converted to 300 dpi, 400 dpi, 500 dpi, and 600 dpi. Edges can be made smooth by the conversion into high resolutions.

Incidentally, although the resolution for Y is not converted, an averaging operation is executed in which an average value of a relevant line and an upper adjacent line is set as a value for the relevant line. At this time, a weighting factor of 50% is set to the relevant line and the upper adjacent line, respectively, so as to obtain a weighted average. This arrangement is provided to ensure that the density can be accurately reproduced even if an original image has a checkered pattern. Here, an arrangement may be provided such that the weighting factor for the relevant line is set to 50%, and the weighting factors for the upper and lower adjacent lines are respectively set to 25%, so as to set an average for the relevant line with respect to the upper and lower adjacent lines as being a value for the relevant line.

Formulae for calculating the conversion of the resolution including the averaging operation are shown in Formulae 1 to 4. Incidentally, in this arithmetic operation, since identical processing is repeated for each three lines of the preconversion line data, the number of a line block consisting of three-line data prior to conversion is set to n, and m-th preconversion line data (data train of a one-line portion) within that block is set to line (n, m) (n = 0, 1, 2, ...; m = 0., 1, 2). In addition, upper-adjacent-line data with respect to a first line in processing is set to 0. Data is set to 256 gradations, and data value 0 is set to white, and data value 255 is set to a full density.

Formula 1

In the case of 300 dpi (Y),

preconversion data line (n, m) (300 dpi)

to postconversion data line' (n, k) (300 dpi)

line' (0, 0) = 0*1/2         + line (0, 0)*1/2

line' (0, 1) = line (0, 0)*1/2 + line (0, 1)*1/2

line' (0, 2) = line (0, 1)*1/2 + line (0, 2)*1/2

.

.

.

line' (n, 0) = line (n-1, 2)*1/2 + line (n, 0)*1/2

line' (n, 1) = line (n, 0)*1/2 + line (n, 1)*1/2

line' (n, 2) = line (n, 1)*1/2 + line (n, 2)*1/2

Formula 2

In the case of 400 dpi (M).

preconversion data line (n, m) (300 dpi)

to postconversion data line' (n, k) (400 dpi)

line' (0, 0) = 0*7/8         + line (0, 0)*1/8

line' (0, 1) = 0*1/8         + line (0, 0)*7/8

line' (0, 2) = line (0, 0)*3/8 + line (0, 1)*5/8

line' (0, 3) = line (0, 1)*5/8 + line (0, 2)*3/8

.

.

.

line' (n, 0) = line (n-1, 2)*7/8 + line (n, 0)*1/8

line' (n, 1) = line (n-1, 2)*1/8 + line (n, 1)*7/8

line' (n, 2) = line (n, 0)*3/8 + line (n, 1)*5/8

line' (n, 3) = line (n, 1)*5/8 + line (n, 2)*3/8

Formula 3

In the case of 500 dpi (C),

preconversion data line (n, m) (300 dpi)

to postconversion data line' (n, k) (500 dpi)

line' (0, 0) = 0*4/5       + line (0, 0)*1/5

line' (0, 1) = 0*1/5       + line (0, 0)*4/5

line' (0, 2) = line (0, 0)*3/5 + line (0, 1)*2/5

line' (0, 3) = line (0, 1)

line' (0, 4) = line (0, 1)*2/5 + line (0, 2)*3/5

.

.

.

line' (n, 0) = line (n-1, 2)*4/5 + line (n, 0)*1/5

line' (n, 1) = line (n-1, 2)*1/5 + line (n, 1)*4/5

line' (n, 2) = line (n, 0)*3/5 + line (n, 1)*2/5

line' (n, 3) = line (n, 1)

line' (n, 4) = line (n, 1)*2/5 + line (n, 2)*3/5

Formula 4

In the case of 600 dpi (K),

preconversion data line (n, m) (300 dpi)

to postconversion data line' (n, k) (600 dpi)

line' (0, 0) = 0*3/4       + line (0, 0)*1/4

line' (0, 1) = 0*1/4       + line (0, 0)*3/4

line' (0, 2) = line (0, 0)*3/4 + line (0, 1)*1/4

line' (0, 3) = line (0, 0)*1/4 + line (0, 1)*3/4

line' (0, 4) = line (0, 1)*3/4 + line (0, 2)*1/4

line' (0, 5) = line (0, 1)*1/4 + line (0, 2)*3/4

.

.

.

$$line' (n, 0) = line (n-1, 2)*3/4 + line (n, 0)*1/4$$

$$line' (n, 1) = line (n-1, 2)*1/4 + line (n, 0)*3/4$$

$$line' (n, 2) = line (n, 0)*3/4 + line (n, 1)*1/4$$

$$line' (n, 3) = line (n, 0)*1/4 + line (n, 1)*3/4$$

$$line' (n, 4) = line (n, 1)*3/4 + line (n, 2)*1/4$$

$$line' (n, 5) = line (n, 1)*1/4 + line (n, 2)*3/4$$

Next, as shown in Fig. 7, pattern processing is executed in which the gradations of pixels subjected to each color separation after conversion of resolution are allotted to a submatrix, and the values of the submatrix are added to the gradation data after conversion of resolution. The submatrix is arrayed in 2-dot units in the subscanning direction, and the number of offset factors of the submatrix is set in correspondence with the gradation of the image so as to improve the gradation characteristic. For example, the number of offset factors of the submatrix for the medium is set to 4, and the number of offset factors of the submatrix for the highlight is set to 8, so as to improve the gradation reproducibility in the highlight.
Incidentally, the sequence of arrangement of the submatrix may be set in the same sequence for the entire pixels, or may be set randomly for each pixel. In this example, the case of addition is shown, but subtraction or the joint use of addition and subtraction may be used.

The data of the gradation image is represented by 8 bits so as to represent 256 gradations. Depending on a recording apparatus, however, in the case where 256 gradations are recorded by 8-bit data, there are cases where a substantial recording time is required, or the 256 gradations cannot be recorded.

Accordingly, a predetermined number of bits among the 8-bit data are canceled in correspondence with the number of offset factors of the set submatrix. If cancellation is effected, the relationship between the number of bits, n, which are canceled and the number of offset factors, D, of the matrix is defined by $D = 2^n$. In addition, cancellation processing is executed with respect to low-order bits in the 8-bit data.

That is, if the number of offset factors of the matrix is 4, the number of bits to be canceled is 2, and two low-order bits in the 8-bit data are set to 0s. If the number of offset factors of the matrix is 8, the number of bits to be canceled is 3, and three low-order bits in the 8-bit data are set to 0s.

Next, as shown in Fig. 8, masks of the illustrated patterns are superimposed on the respective color images, and the gradation data values of pixels corresponding to white portions are set to 0s, while gradation data values of pixels corresponding to black portions are extracted as they are. Incidentally, if the mask operation is executed with respect to a character region of the image, the continuity of gradations is lost. Hence, if the gradation data values of the image having 256 gradations are 255 corresponding to the character, the mask operation is not executed, and the gradation data values of 255 are extracted as they are.

Although in the above-described embodiment cancellation processing is executed with respect to bits of the gradation data in a stage preceding the mask operation, the cancellation processing may be executed in a stage subsequent to the mask operation.

In the aforementioned respective operations, the pattern dither processing and the cancellation processing are not essential items of processing, and are processings for alleviating the burden on the recording apparatus so as to satisfy the number of gradations and the recording speed which can be handled by the recording apparatus. Further, in the special mask operation of 255-gradation data, there are cases where better results are obtained depending on applications even if the mask operation is not performed.

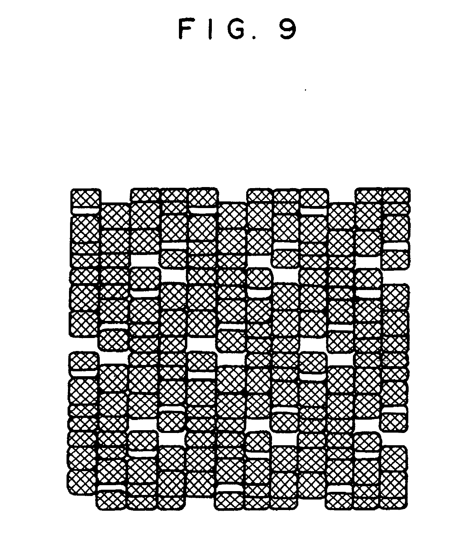

Fig. 9 illustrates a state in which patterns corresponding to the respective colors are superimposed one on top of another. As shown, moire cycles are dispersed as arrangement patterns having reduced resolutions in the main scanning direction are combined, thereby making it possible to avoid the aforementioned horizontal-line moire.

The aforementioned arrangement pattern is applicable to one color or two or three colors among the four colors. In addition to being lowered to 1/2, the resolution in the main scanning direction is set in dot units, as in 1/3 or 1/4, and the reductions to the respective sizes are effective, respectively. These conditions are set depending on a image to be recorded.

In addition, in a case where the resolution in the main scanning direction is lowered, two adjacent dots in the main scanning direction may be controlled to independent sizes on the basis of data peculiar thereto. That is, the resolution in terms of shape declines, but the resolution of data does not decline. Further, although in this embodiment the two adjacent dots are arranged completely in parallel to each other in the main scanning direction, the dots may be arranged by being slightly offset in the subscanning direction.

The recording means which is capable of avoiding the aforementioned horizontal-line moire is not confined to a recording process based on thermosensitive transfer materials disclosed in Japanese Patent Application Laid-Open No. 263695/1993, and is also applicable to various multicolor-image recording processes, including known thermal transfer recording, dye-sublimation thermal transfer recording, thermal color recording (using such as thermo autochrome paper FJX-TV P-20 manufactured by Fuji Photo Film Co., Ltd.), ink-jet recording, electrophotographic recording, color offset printing using such as a lith type film, and so on. In particular, the recording means used in the present invention is suitable to recording processes in which area gradations are adopted.

Although the color moire and the harsh texture were alleviated even if dye-sublimation thermal transfer materials were used and the density gradation was applied to each color, the application is not suitable since the blurring of black characters was observable (see Comparative Example 6). Further, if the 1/2 arrangement pattern was applied to K alone, the contours of black characters were made sharp as compared to Comparative Example 6 (see Example 9). As for the dye-sublimation thermal transfer materials used, the ink was a dye-sublimation-type A3 super ink sheet CH-791 manufactured by Seiko Instruments Inc., and the paper used was a dye-sublimation-type A3 plain paper CH-895 manufactured by Seiko Instruments Inc.

In addition, if recording is effected in accordance with the above-described embodiment, since harshness factors such as rosette patterns, which are conventionally observable when printing is effected, are reduced, it is possible to obtain an image close to a photograph exhibiting a small amount of harsh texture particularly in the images which are formed by superimposing four color separations of 50% area ratio pixel.

The above-described embodiment is applicable to direct thermal color recording, thermal transfer recording, and dye-sublimation thermal transfer recording in which images are recorded by thermal heads, respectively. The above-described embodiment is also applicable to electrophotographic processes, silver halide photographic processes, and recordings using photopolymer multicolor photosensitive materials in which images are recorded by liquid-crystal array line heads, respectively. The above-described embodiment is further applicable to electrophotographic processes and silver halide photographic processes in which images are recorded by LED line heads or EL line heads, respectively. Incidentally, the above-described embodiment is also applicable to laser recording in a case where an image is recorded on the basis of high-resolution image data in laser recording in the main scanning direction with a high resolution, since the problems which are overcome by the present invention are involved, and also in a case where an image is recorded on the basis of low-resolution image data, since a gradation image is obtained by making the resolution variable.

Further, the above-described embodiment is also applicable to a case where recording is effected on an intermediate medium in addition to direct multicolor printing, so that it is applicable to, for instance, an output device using a lith film or a printing plate.

Although in the above-described embodiment a description has been given of the case of recording an image, the embodiment is also applicable to the case of reading an image using, for instance, a line imaging element array.

In the above-described embodiment, a description has been given of two-dimensional recording in which the directions of one-dimensional arrangement of recording elements are defined as being the main scanning direction and the subscanning direction perpendicular to the main scanning direction. However, it goes without saying that the directions of one-dimensional arrangement of recording elements may be defined as being the subscanning direction and the main scanning direction perpendicular to the subscanning direction.

In accordance with the above-described invention, an arrangement pattern having a desired resolution in the subscanning direction can be formed by changing the cycle of arrangement of dots in the subscanning direction by a desired magnification. Accordingly, the resolution in the subscanning direction is made variable, thereby making it possible to suppress the color moire effectively.

Furthermore, if resolutions in both the subscanning direction and in the main scanning direction are made variable, it is possible to avoid linear moire occurring when a particular image is recorded.

## Claims

1. A method of recording a multicolor image

   by combining colors of yellow, magenta, cyan, and black, and

   by moving in a subscanning direction a head having a plurality of recording elements arrayed in a main scanning direction to make variable a density or an area ratio of each recording pixel in correspondence with a density of an original image,

   wherein the pixels for each color are constituted by a dot and/or a blank, and wherein each dot has a substantially fixed shape and a variable density or a substantially fixed density and a variable shape,

   the method comprising the steps of:

recording a first color with an arrangement pattern having a particular fixed dot pitch; and
recording a second, a third and a fourth color with respective patterns in which dot pitches in the subscanning direction are set to mutually different fractional multiples of the dot pitch of the first color.

2. A method according to claim 1, wherein ratios of the dot pitches in the subscanning direction of the four colors are set to 1 : 0.75 : 0.60 : 0.50 in random order.

3. A method according to claim 1, comprising the step of:

increasing the dot pitch in the main scanning direction of one or more colors to lower a resolution in the main scanning direction of the particular color.

4. A method according to claim 3, wherein the dot pitches of yellow, magenta, cyan, and black in the main scanning direction and the subscanning direction are set to ratios of 2 : 1 : 2 : 1 and 1 : 0.75 : 0.60 : 0.50, respectively.

5. A method according to claim 3, wherein the dot pitches of yellow, magenta, cyan, and black in the main scanning direction and the subscanning direction are set to ratios of 2 : 2 : 1 : 1 and 1 : 0.60 : 0.75 : 0.50, respectively.

6. A method of recording an image according to Claim 4, further comprising the step of:

consecutively executing in a predetermined pixel cycle a resolution conversion operation in which a resolution in the subscanning direction in color separation of yellow, magenta, cyan and black each having a predetermined resolution is converted by interpolation processing, and a mask operation in which masks each having a predetermined pattern are superimposed on respective color-separated images with resolutions thereof converted, and a value of gradation data of the pixel which overlaps with the predetermined pattern among the pixels is set to a 0 so as to extract gradation image data of the respective colors.

7. A method of recording an image according to Claim 6, further comprising the steps of:

performing pattern processing in which gradations of the pixels of each of the colors are allotted to elements of a submatrix which is arranged in the subscanning direction in a unit of two pixels after the resolution conversion operation; and

performing cancellation processing in which a predetermined number of low-order bits of the gradation data of each of the pixels are cancelled before or after the mask operation.

8. A method of recording an image according to Claim 7, further comprising the step of:

determining the number of factors of the submatrix in accordance with the value of the gradation data .

9. A method of recording an image according to Claim 6, wherein in the mask operation gradation data having a maximum value is extracted with respect to an image in which the value of the gradation data has a maximum value.

**Patentansprüche**

1. Verfahren zum Aufzeichnen eines mehrfarbigen Bildes
bei welchem die Farben Gelb, Magenta, Cyan und Schwarz kombiniert werden, und
bei welchem ein Kopf mit einer Mehrzahl von Aufzeichnungselementen, die in einer Hauptabtastrichtung angeordnet sind, in einer Subabtastrichtung bewegt wird, um eine Dichte oder ein Flächenverhältnis jedes Aufzeichnungspixels entsprechend einer Dichte eines Originalbildes veränderlich zu machen,
wobei die Pixel für jede Farbe durch einen Punkt und/oder eine Leerstelle gebildet werden, und wobei jeder Punkt eine im Wesentlichen feste Form und eine veränderliche Dichte oder eine im Wesentlichen feste Dichte und eine veränderliche Form aufweist,
wobei das Verfahren die Schritte umfasst:

Aufzeichnen einer ersten Farbe mit einem Anordnungsmuster, welches einen bestimmte vorgegebenen Punktabstand aufweist; und

Aufzeichnen einer zweiten, einer dritten und einer vierten Farbe mit entsprechenden Mustern, in welchen Punktabstände in der Sub-Abtastrichtung auf gegenseitig verschiedene, gebrochene Vielfache des Punktabstands der ersten Farbe gesetzt werden.

2. Verfahren gemäß Anspruch 1, wobei Verhältnisse der Punktabstände in der Sub-Abtastrichtung der vier Farben in zufälliger Reihenfolge auf 1 : 0,75 : 0,60 : 0,50 gesetzt werden.

3. Verfahren gemäß Anspruch 1, umfassend den Schritt:

Erhöhen des Punktabstands in der Hauptabtastrichtung von einer oder mehreren Farben, um eine Auflösung in der Hauptabtastrichtung der bestimmten Farbe zu senken.

4. Verfahren gemäß Anspruch 3, wobei die Punktabstände von Gelb, Magenta, Cyan und Schwarz in der Hauptabtastrichtung und in der Sub-Abtastrichtung auf die Verhältnisse 2 : 1 : 1 bzw. 1 : 0,75 : 0,60 : 0,50 gesetzt werden.

5. Verfahren gemäß Anspruch 3, wobei die Punktabstände von Gelb, Magenta, Cyan und Schwarz in der Hauptabtastrichtung und in der Sub-Abtastrichtung auf die Verhältnisse 2 : 2 : 1 : 1 bzw. 1 : 0,60 : 0,75 : 0,50 gesetzt werden.

6. Verfahren zum Aufzeichnen eines Bildes gemäß Anspruch 4, weiter umfassend den Schritt:

nacheinander Ausführen, in einem vorgegebenen Pixelzyklus, einer Auflösungskonversionsoperation, bei der eine Auflösung in der Sub-Abtastrichtung in einer Farbseparation von Gelb, Magenta, Cyan und Schwarz, von denen jede eine vorgegebene Auflösung aufweist, durch ein Interpolationsverfahren konvertiert wird, und einer Maskenoperation, bei der Masken, von denen jede ein vorbestimmtes Muster aufweist, auf die entsprechenden farbseparierten Bilder mit konvertierten Auflösungen überlagert werden, und ein Gradierungsdatenwert des Pixels, der mit dem vorbestimmten Muster unter den Pixeln überlappt, auf Null gesetzt wird, um Gradierungsbilddaten der entsprechenden Farben zu extrahieren.

7. Verfahren zum Aufzeichnen eines Bildes gemäß Anspruch 6, weiter umfassend die Schritte:

Durchführen eines Musterverarbeitungsverfahrens, bei dem Gradierungen der Pixel jeder der Farben Elementen einer Submatrix zugeordnet werden, die in der Sub-Abtastrichtung in einer Einheit von zwei Pixeln angeordnet ist, nachdem die Auflösungskonversionsoperation durchgeführt wurde; und

Durchführen eines Streichverfahrens, bei dem eine vorbestimmte Anzahl von niederrangigen Bits der Gradierungsdaten jedes Pixels vor oder nach der Maskierungsoperation gestrichen werden.

8. Verfahren zum Aufzeichnen eines Bildes gemäß Anspruch 7, ferner umfassend den Schritt:

Ermitteln der Anzahl von Faktoren der Submatrix gemäß dem Wert der Gradierungsdaten.

9. Verfahren zum Aufzeichnen eines Bildes gemäß Anspruch 6, wobei bei der Maskierungsoperation Gradierungsdaten mit einem Maximalwert bezüglich eines Bildes extrahiert werden, bei dem der Wert der Gradierungsdaten einen Maximalwert aufweist.

**Revendications**

1. Procédé d'enregistrement d'une image multicouleur en combinant des couleurs que sont le jaune, le magenta, le cyan et le noir et en déplaçant suivant une direction de sous-balayage une tête qui comporte une pluralité d'éléments d'enregistrement agencés en réseau suivant une direction de balayage principal afin de rendre variable une densité ou un rapport d'aires de chaque pixel d'enregistrement en correspondance avec une densité d'une image originale, dans lequel les pixels pour chaque couleur sont constitués au moyen d'un point et/ou d'un élément vierge et dans lequel chaque point présente une forme sensiblement fixe et une densité variable ou une densité sensiblement fixe et une forme variable,
le procédé comprenant les étapes de :

enregistrement d'une première couleur moyennant un motif d'agencement présentant un pas de point fixe particulier ; et

enregistrement de seconde, troisième et quatrième couleurs moyennant des motifs respectifs selon lesquels des pas de point suivant la direction de sous-balayage sont établis de manière à être des multiples fractionnaires mutuellement différents du pas de point de la première couleur.

2.  Procédé selon la revendication 1, dans lequel les rapports des pas de point suivant la direction de sous-balayage des quatre couleurs sont établis à 1:0,75:0,60:0,50 selon un ordre aléatoire.

3.  Procédé selon la revendication 1, comprenant l'étape d'augmentation du pas de point suivant la direction de balayage principal d'une ou de plusieurs couleurs afin d'abaisser une résolution suivant la direction de balayage principal de la couleur particulière.

4.  Procédé selon la revendication 3, dans lequel les pas de point du jaune, du magenta, du cyan et du noir suivant la direction de balayage principal et la direction de sous-balayage sont respectivement établis à des rapports de 2:1:2:1 et 1:0,75:0,60:0,50.

5.  Procédé selon la revendication 3, dans lequel les pas de point du jaune, du magenta, du cyan et du noir suivant la direction de balayage principal et la direction de sous-balayage sont respectivement établis à des rapports de 2:2:1:1 et 1:0,60:0,75:0,50.

6.  Procédé d'enregistrement d'une image selon la revendication 4, comprenant en outre l'étape de :

    exécution de façon consécutive selon un cycle de pixels prédéterminé d'une opération de conversion de résolution selon laquelle une résolution suivant la direction de sous-balayage en termes de séparation des couleurs que sont le jaune, le magenta, le cyan et le noir dont chacune présente une résolution prédéterminée est convertie au moyen d'un traitement par interpolation, et d'une opération de masquage selon laquelle des masques dont chacun présente un motif prédéterminé sont superposés sur des images séparées en termes de couleurs respectives tandis que leurs résolutions sont converties, et une valeur de données de gradation du pixel chevauchant le motif prédéterminé parmi les pixels est établie à 0 de manière à extraire des données d'image de gradation des couleurs respectives.

7.  Procédé d'enregistrement d'une image selon la revendication 6, comprenant en outre les étapes de :

    réalisation d'un traitement de motif selon lequel des gradations des pixels de chacune des couleurs sont allouées à des éléments d'une sous-matrice qui est agencée suivant la direction de sous-balayage selon une unité de 2 pixels après l'opération de conversion de résolution ; et

    réalisation d'un traitement d'annulation selon lequel les bits d'un nombre prédéterminé de bits d'ordre faible des données de gradation de chacun des pixels sont annulés avant ou après l'opération de masquage.

8.  Procédé d'enregistrement d'une image selon la revendication 7, comprenant en outre l'étape de :

    détermination du nombre de facteurs de la sous-matrice conformément à la valeur des données de gradation.

9.  Procédé d'enregistrement d'une image selon la revendication 6, dans lequel, au niveau de l'opération de masquage, les données de gradation présentant une valeur maximum sont extraites en relation avec une image dans laquelle la valeur des données de gradation présente une valeur maximum.

## F I G. 1 A

NORMALLY ARRANGED
PATTERN

## F I G. 1 B

RANDOMLY ARRANGED
PATTERN

## F I G. 1 C

2/3 ARRANGEMENT
PATTERN

## F I G. 1 D

1/2 ARRANGEMENT
PATTERN

# FIG. 2

# F I G. 3

Y: NORMALLY ARRANGED PATTERN*

M: 3/4 ARRANGEMENT PATTERN

C: 3/5 ARRANGEMENT PATTERN*

K: 1/2 ARRANGEMENT PATTERN

*: DECLINE NOTED IN RESOLUTION MAIN
SCANNING DIRECTION

F I G. 4

Y — 6 LINES

M(C) — 6 LINES

C(M) — 6 LINES

K — 6 LINES

F I G. 5

300 → 300 — 6 LINES

300 → 400 — 8 LINES

300 → 500 — 10 LINES

300 → 600 — 12 LINES

FIG. 6

WEIGHTING FACTOR FOR UPPER LINE: 50
WEIGHTING FACTOR FOR GIVEN LINE: 50
WEIGHTING FACTOR FOR LOWER LINE: 0

FIG. 7

| 0 | 3 |
|---|---|
| 0 | 3 |
| 2 | 1 |
| 2 | 1 |

FIG. 8

EP 0 720 350 B1

FIG. 9

# FIG. 10

CPU 112 — COLOR FLAG → RESOLUTION CONVERSION (AND ADDITIONAL PROCESSING IF NEEDED) 102

DATA BUFFER 100 ← PRECONVERSION DATA

POSTCONVERSION DATA → LINE BUFFER 104 → DATA/STROBE CONVERSION 106

MOTOR DRIVER 114

PULSE MOTOR 116

PRINT HEAD 108

PAPER DRIVE ROLL 110

# F I G. 11

```
        ┌──────────┐
        │  START   │
        └────┬─────┘
             │
   ┌─────────▼──────────┐
   │   SET COLOR FLAG   │────── STEP 110
   └─────────┬──────────┘
             │
   ┌─────────▼──────────────┐
   │ INITIALIZE PAPER POSITION │──── STEP 112
   └─────────┬──────────────┘
             │
   ┌─────────▼──────────────┐
   │ PRECONVERSION DATA INPUT │──── STEP 114
   └─────────┬──────────────┘
             │
   ┌─────────▼──────────────────┐
   │ RESOLUTION CONVERSION      │
   │ (AND ADDITIONAL PROCESSING │──── STEP 116
   │ IF NEEDED)                 │
   └─────────┬──────────────────┘
             │
   ┌─────────▼──────────┐
   │       PRINT        │────── STEP 118
   └─────────┬──────────┘
             │
        NO  ◄◇ 4 COLOR PRINTED? ◇──── STEP 120
             │ YES
   ┌─────────▼──────────┐
   │   FEED OUT PAPER   │────── STEP 122
   └─────────┬──────────┘
             │
        ┌────▼─────┐
        │   END    │
        └──────────┘
```